# EUROPEAN PATENT APPLICATION

(11) **EP 4 228 077 A1**
(43) Date of publication of application: **16.08.2023**
(21) Application number: 23155133.4
(22) Date of filing: 06.02.2023
(51) Int. Cl.: H01M 50/503, H01M 50/521, H01M 50/55, H01M 50/557, H01M 50/566, H01M 50/567, H01M 10/052

(54) **BATTERY**

(30) Priority: 14.02.2022 JP 2022020548
(71) Applicant: Prime Planet Energy & Solutions, Inc., Chuo-ku Tokyo 103-0022 (JP)
(72) Inventor: YAMAMOTO, Shota, Tokyo, 103-0022 (JP); MIYAMURA, Yukinobu, Tokyo, 103-0022 (JP)
(74) Representative: Kuhnen & Wacker Patent- und Rechtsanwaltsbüro PartG mbB

(57) **Abstract**

A battery (100) disclosed herein includes a terminal (40). The terminal (40) includes: a first conductive member (41); a second conductive member (42) electrically connected to the first conductive member (41); a fastener (43) mechanically securing the first conductive member (41) and the second conductive member (42) to each other; and a metal joint (45) metal-joining the first conductive member (41) and the second conductive member (42) to each other. The metal joint (45) includes a fused and solidified portion. The fused and solidified portion includes a first sub-portion (451) formed in the first conductive member (41), and a second sub-portion (452) formed in the second conductive member (42). When viewed in cross section, an area of the second sub-portion (452) is 35% or less of an area of the first sub-portion (451).

## Description

### BACKGROUND OF THE DISCLOSURE

### 1. Field

The present application relates to batteries.

### 2. Background

Usually, batteries, such as lithium ion secondary batteries, each include: an electrode body including electrodes; and a battery case housing the electrode body. A battery of this type further includes terminals that are electrically connected to the electrodes inside the battery case and are protruded out of the battery case. Conventional techniques related to such terminals are disclosed in, for example, Japanese Patent No. 6216368, JP 2019-121468 A, and JP 2020-95837 A.

Japanese Patent No. 6216368, for example, discloses a terminal structure including: a rivet member electrically connected to an electrode inside a battery case, inserted through a through hole of the battery case, and protruded out of the battery case; and a conductive member including a first through hole through which the rivet member is inserted and electrically connecting the rivet member to an external connection terminal bolt. The technique disclosed in Japanese Patent No. 6216368 involves inserting the rivet member through the first through hole of the conductive member and swaging an end of the rivet member in an up-down direction. As a result, the rivet member is swaged to a portion of the conductive member defining the peripheral edge of the first through hole and is thus electrically connected to the conductive member.

If force, such as vibrations or an impact, is externally applied to a terminal of a battery in use, the swaged portion may become unsteady and suffer distortion, which may create a gap between the rivet member and the conductive member. Unfortunately, such a gap may make the conductive connection of the terminal unstable or cause a connection failure of the terminal. Thus, what is needed is to improve the conduction reliability of the terminal. From the viewpoint of enhancing battery performance, a wide conduction path is desirably provided inside the terminal so as to reduce conduction resistance.

### SUMMARY

Accordingly, embodiments of the present application provide batteries including terminals that offer improved conduction reliability and reduced conduction resistance.

An embodiment of the present application provides a battery including a terminal. The terminal includes: a first conductive member having a plate shape; a second conductive member including a flange electrically connected to the first conductive member; a fastener mechanically securing the first conductive member and the flange of the second conductive member to each other; and a metal joint metal-joining the first conductive member and the flange of the second conductive member to each other at a location away from the fastener. The first conductive member contains aluminum or an aluminum alloy. The second conductive member contains copper or a copper alloy. The metal joint includes a fused and solidified portion in which the first conductive member and the second conductive member are fused together. The fused and solidified portion includes: a first sub-portion formed in the first conductive member; and a second sub-portion formed in the second conductive member. When viewed in cross section, an area of the second sub-portion is 35% or less of an area of the first sub-portion.

The terminal includes two types of connectors, i.e., the fastener and the metal joint, which make connections in different ways. Thus, if vibrations and/or an impact, for example, are/is externally applied to the terminal, the connectors would be unlikely to be distorted, and intimate contact between the first conductive member and the second conductive member would be likely to be maintained. Accordingly, a conductive connection between the first conductive member and the second conductive member is stably maintainable. Reducing the percentage of the area of the second sub-portion makes it possible to reduce penetration of Cu, which is contained in the second conductive member, into the first sub-portion. The techniques disclosed herein are thus able to prevent or reduce occurrence of cracks (or in particular, a longitudinal crack described below) in the fused and solidified portion so as to provide a wide conduction path between the first conductive member and the second conductive member. Consequently, the techniques disclosed herein are able to provide batteries including terminals that offer low resistance and improved conduction reliability.

### BRIEF DESCRIPTION OF THE DRAWINGS

FIG. 1 is a schematic perspective view of a battery according to an embodiment of the present application.
FIG. 2 is a schematic, vertical cross-sectional view of the battery taken along the line II-II in FIG. 1.
FIG. 3 is a partially enlarged cross-sectional view of the battery, schematically illustrating a negative electrode terminal and components adjacent thereto.
FIG. 4 is a schematic plan view of the negative electrode terminal according to the present embodiment.
FIG. 5 is a schematic, vertical cross-sectional view of the negative electrode terminal taken along the line V-V in FIG. 4.
FIG. 6 is an enlarged view of a metal joint and its adjacent region.
FIG. 7 is a schematic bottom view of the negative electrode terminal illustrated in FIG. 4.
FIG. 8 is a schematic side view of the negative electrode terminal illustrated in FIG. 4.
FIG. 9A is a plan view of a fused and solidified portion, illustrating transverse cracks developed therein.
FIG. 9B is a cross-sectional view of the fused and solidified portion taken along the line IXB-IXB in FIG. 9A.
FIG. 10A is a plan view of the fused and solidified portion, illustrating a longitudinal crack developed therein.
FIG. 10B is a cross-sectional view of the fused and solidified portion taken along the line XB-XB in FIG. 10A.
FIG. 11 is a schematic perspective view of a battery pack according to the present embodiment.
FIG. 12 is a scanning electron microscope (SEM) image of a cross section of a fused and solidified portion in Example 1.
FIG. 13 is an SEM image of a cross section of a fused and solidified portion in Example 2.
FIG. 14 is an SEM image of a cross section of a fused and solidified portion in Example 3.
FIG. 15 is an SEM image of a cross section of a fused and solidified portion in Example 4.
FIG. 16 is an SEM image of a cross section of a fused and solidified portion in a comparative example.
FIG. 17 is a mapping image of the cross section of FIG. 14 on which Cu elements are mapped.

### DETAILED DESCRIPTION OF THE PREFERRED EMBODIMENTS

A preferred embodiment of techniques disclosed herein will be described below with reference to the drawings. Matters that are necessary for carrying out the present application but are not specifically mentioned herein (e.g., common battery structures and battery manufacturing processes that do not characterize the present application) may be understood by those skilled in the art as design matters based on techniques known in the related art. The present application may be carried out on the basis of the disclosure provided herein and common technical knowledge in the related art.

As used herein, the term "battery" refers to any of various electricity storage devices from which electric energy is derivable, and is a concept encompassing primary batteries and secondary batteries. As used herein, the term "secondary battery" refers to any of various electricity storage devices that are repeatedly chargeable and dischargeable, and is a concept encompassing storage batteries (or chemical batteries), such as lithium ion secondary batteries and nickel-metal hydride batteries, and capacitors (or physical batteries), such as electric double layer capacitors.

### Battery 100

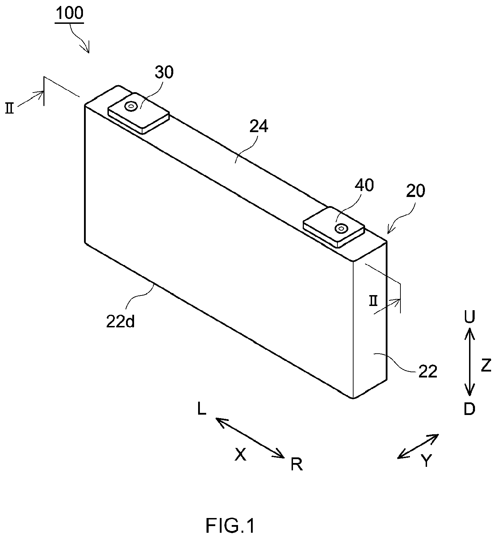

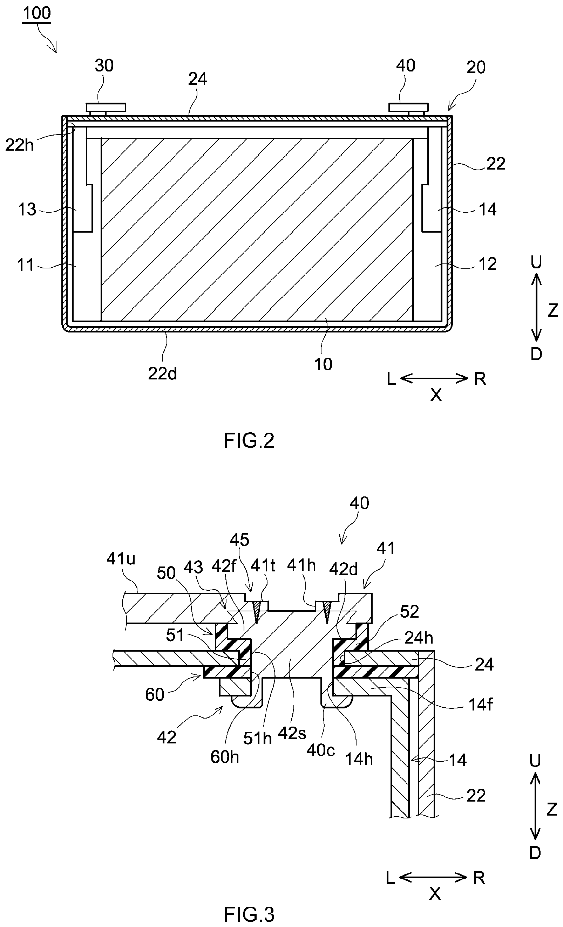

FIG. 1 is a perspective view of a battery 100. FIG. 2 is a schematic, vertical cross-sectional view of the battery 100 taken along the line II-II in FIG. 1. In the following description, the reference signs L, R, U, and D in the drawings respectively represent left, right, up, and down. The reference sign X in the drawings represents a longitudinal direction of the battery 100. The reference sign Y in the drawings represents a width direction perpendicular or substantially perpendicular to the longitudinal direction X. The reference sign Z in the drawings represents an up-down direction. These directions, however, are defined merely for the sake of convenience of description and do not limit in any way how the battery 100 may be installed.

As illustrated in FIG. 2, the battery 100 includes an electrode body 10, a battery case 20, a positive electrode terminal 30, and a negative electrode terminal 40. The battery 100 is characterized by including the positive electrode terminal 30 and/or the negative electrode terminal 40 disclosed herein. Other than this feature, the battery 100 may be similar to batteries known in the related art. In this embodiment, the battery 100 is a lithium ion secondary battery. Although not illustrated in FIG. 2, the battery 100 in this embodiment further includes an electrolyte. The battery 100 includes the electrode body 10 and the electrolyte (not illustrated) that are housed in the battery case 20.

The electrode body 10 may be similar to any electrode body known in the related art. The electrode body 10 includes a positive electrode (not illustrated) and a negative electrode (not illustrated). The electrode body 10 is, for example, a flat wound electrode body provided by: placing the positive and negative electrodes, each having a strip shape, on top of another, with the positive and negative electrodes insulated from each other with a strip-shaped separator interposed therebetween; and winding the positive and negative electrodes and the separator around a winding axis into a flat shape. Alternatively, the electrode body 10 may be a laminated electrode body provided by stacking the positive and negative electrodes, each having a quadrangular shape (which is typically a rectangular shape), on top of another such that the positive and negative electrodes are insulated from each other. The positive electrode includes a positive electrode collector 11 and a positive electrode compound layer (not illustrated) fixed onto the positive electrode collector 11. The positive electrode collector 11 is made of, for example, a conductive metal, such as aluminum, an aluminum alloy, nickel, or stainless steel. The positive electrode compound layer contains a positive electrode active material (e.g., a lithium transition metal composite oxide). The negative electrode includes a negative electrode collector 12 and a negative electrode compound layer (not illustrated) fixed onto the negative electrode collector 12. The negative electrode collector 12 is made of, for example, a conductive metal, such as copper, a copper alloy, nickel, or stainless steel. The negative electrode compound layer contains a negative electrode active material (e.g., a carbon material, such as graphite).

As indicated by the oblique lines in FIG. 2, a central portion of the electrode body 10 in the longitudinal direction X is provided with a laminated region in which the positive electrode compound layer and the negative electrode compound layer that are insulated from each other are laminated. At the left end of the electrode body 10 in the longitudinal direction X, a portion of the positive electrode collector 11 provided with no positive electrode compound layer (which hereinafter be referred to as a "positive electrode collector exposed portion") is protruded from the laminated region. The positive electrode collector exposed portion has a positive electrode lead member 13 attached thereto. The positive electrode lead member 13 may be made of a metal material similar to that used for the positive electrode collector 11. Examples of the metal material for the positive electrode lead member 13 may include conductive metals, such as aluminum, an aluminum alloy, nickel, and stainless steel. At the right end of the electrode body 10 in the longitudinal direction X, a portion of the negative electrode collector 12 provided with no negative electrode compound layer (which hereinafter be referred to as a "negative electrode collector exposed portion") is protruded from the laminated region. The negative electrode collector exposed portion has a negative electrode lead member 14 attached thereto. The negative electrode lead member 14 may be made of a metal material different from that used for the positive electrode lead member 13. The negative electrode lead member 14 may be made of a metal material similar to that used for the negative electrode collector 12. Examples of the metal material for the negative electrode lead member 14 may include conductive metals, such as copper, a copper alloy, nickel, and stainless steel.

The electrolyte may be any electrolyte known the related art. The electrolyte is, for example, a nonaqueous liquid electrolyte (or a nonaqueous electrolyte solution) containing a nonaqueous solvent and a supporting electrolyte. Examples of the nonaqueous solvent include carbonates, such as ethylene carbonate, dimethyl carbonate, and ethyl methyl carbonate. Examples of the supporting electrolyte include a fluorine-containing lithium salt, such as LiPF₆. Alternatively, the electrolyte may be in solid form (or may be a solid electrolyte) and may be integral with the electrode body 10.

The battery case 20 is a casing that houses the electrode body 10. In this embodiment, the battery case 20 has a flat cuboidal shape (or rectangular shape) with a bottom. The battery case 20, however, does not necessarily have to have a rectangular shape. The battery case 20 may have any other shape, such as a circular cylindrical shape. The battery case 20 may be made of any conventionally used material. The battery case 20 is made of, for example, a lightweight, highly thermally conductive metal material, such as aluminum, an aluminum alloy, or stainless steel. As illustrated in FIG. 2, the battery case 20 includes: a case body 22 including an opening 22h; and a lid (or sealing plate) 24 closing the opening 22h. The lid 24 is joined (e.g., welded) to the peripheral edge of the opening 22h of the case body 22 and is thus integral with the battery case 20. The battery case 20 is hermetically sealed (or hermetically closed) with the lid 24.

The case body 22 includes a flat bottom surface 22d. The lid 24 faces the bottom surface 22d of the case body 22. The lid 24 is attached to the case body 22 so as to close the opening 22h of the case body 22. In this embodiment, the lid 24 has a substantially rectangular shape. As used herein, the term "substantially rectangular shape" refers to not only a perfect rectangular shape (or a perfect oblong shape) but also various other rectangular shapes, such as a rectangular shape whose corners connecting short and long sides are rounded and a rectangular shape whose corners have cut-outs.

As illustrated in FIG. 1, the positive electrode terminal 30 and the negative electrode terminal 40 protrude out of the battery case 20. In this embodiment, the positive electrode terminal 30 and the negative electrode terminal 40 protrude from the same surface of the battery case 20. Specifically, the positive electrode terminal 30 and the negative electrode terminal 40 protrude from the lid 24. Alternatively, the positive electrode terminal 30 and the negative electrode terminal 40 may protrude from different surfaces of the battery case 20. The positive electrode terminal 30 and the negative electrode terminal 40 are each disposed on an associated one of the ends of the lid 24 in the longitudinal direction X. The positive electrode terminal 30 and/or the negative electrode terminal 40 are/is example(s) of a terminal disclosed herein.

As illustrated in FIG. 2, the positive electrode terminal 30 is electrically connected to the positive electrode of the electrode body 10 through the positive electrode lead member 13 inside the battery case 20. The negative electrode terminal 40 is electrically connected to the negative electrode of the electrode body 10 through the negative electrode lead member 14 inside the battery case 20. The positive electrode terminal 30 and the negative electrode terminal 40 are attached to the lid 24. The positive electrode terminal 30 and the negative electrode terminal 40 are each insulated from the lid 24 with a gasket 50 (see FIG. 3) and an insulator 60 (see FIG. 3).

FIG. 3 is a partially enlarged cross-sectional view of the battery 100, schematically illustrating the negative electrode terminal 40 and components adjacent thereto. A structure of the negative electrode terminal 40 will, by way of example, be described in detail below. The positive electrode terminal 30 may be similar in structure to the negative electrode terminal 40. Assuming that the positive electrode terminal 30 is similar in structure to the negative electrode terminal 40, the term "negative electrode" in the following description may be read as "positive electrode" when appropriate.

As illustrated in FIG. 3, the lid 24 is provided with a terminal insertion hole 24h passing through the lid 24 in the up-down direction Z. In a plan view, the terminal insertion hole 24h has, for example, a circular shape. The terminal insertion hole 24h has an inside diameter that allows insertion of a shaft column 42s (which will be described below) of the negative electrode terminal 40 yet to be swaged. The terminal insertion hole 24h is smaller than a flange 42f (which will be described below) of the negative electrode terminal 40.

The negative electrode lead member 14 is attached to the negative electrode collector exposed portion of the negative electrode collector 12. The negative electrode lead member 14 defines a conduction path through which the negative electrode is electrically connected to the negative electrode terminal 40. The negative electrode lead member 14 includes a flat portion 14f extending horizontally along an inner surface of the lid 24. The flat portion 14f is provided with a through hole 14h overlapping the terminal insertion hole 24h in the up-down direction Z. The through hole 14h has an inside diameter that allows insertion of the shaft column 42s (which will be described below) of the negative electrode terminal 40 yet to be swaged. The negative electrode lead member 14 that is insulated from the lid 24 with the insulator 60 is secured to the lid 24 by swaging.

The gasket 50 is an insulating member disposed between the upper surface (or outer surface) of the lid 24 and the negative electrode terminal 40. In this embodiment, the gasket 50 not only has the function of insulating the lid 24 and the negative electrode terminal 40 from each other, but also has the function of closing the terminal insertion hole 24h. The gasket 50 is made of an electrically insulating, elastically deformable resin material. Examples of such a material include: a fluorinated resin, such as perfluoroalkoxy alkane (PFA); polyphenylene sulfide (PPS); and aliphatic polyamide.

The gasket 50 includes a tubular portion 51 and a base portion 52. The tubular portion 51 prevents direct contact between the lid 24 and the shaft column 42s of the negative electrode terminal 40. The tubular portion 51 has a hollow cylindrical shape. The tubular portion 51 includes a through hole 51h passing through the tubular portion 51 in the up-down direction Z. The through hole 51h allows insertion of the shaft column 42s of the negative electrode terminal 40 yet to be swaged. The tubular portion 51 is inserted through the terminal insertion hole 24h of the lid 24. The base portion 52 prevents direct contact between the lid 24 and the flange 42f (which will be described below) of the negative electrode terminal 40. The base portion 52 is connected to the upper end of the tubular portion 51. The base portion 52 extends horizontally from the upper end of the tubular portion 51. The base portion 52 has, for example, a ring shape such that the base portion 52 is located around the terminal insertion hole 24h of the lid 24. The base portion 52 extends along the upper surface of the lid 24. The base portion 52 is sandwiched between a lower surface 42d of the flange 42f of the negative electrode terminal 40 and the upper surface of the lid 24 and is compressed in the up-down direction Z by swaging.

The insulator 60 is an insulating member disposed between the lower surface (or inner surface) of the lid 24 and the negative electrode lead member 14. The insulator 60 has the function of insulating the lid 24 and the negative electrode lead member 14 from each other. The insulator 60 includes a flat portion extending horizontally along the inner surface of the lid 24. This flat portion is provided with a through hole 60h overlapping the terminal insertion hole 24h in the up-down direction Z. The through hole 60h has an inside diameter that allows insertion of the shaft column 42s of the negative electrode terminal 40. The insulator 60 is made of an electrically insulating, elastically deformable resin material resistant to an electrolyte to be used. Examples of such a material include: a fluorinated resin, such as perfluoroalkoxy alkane (PFA); and polyphenylene sulfide (PPS). The flat portion of the insulator 60 is sandwiched between the lower surface of the lid 24 and the upper surface of the negative electrode lead member 14 and is compressed in the up-down direction Z by swaging.

### Negative Electrode Terminal 40

As illustrated in FIG. 3, the negative electrode terminal 40 passes through the terminal insertion hole 24h and extends from inside to outside of the battery case 20. As will be described below, the negative electrode terminal 40 includes two types of conductive members, i.e., a first conductive member 41 and a second conductive member 42, which are integral with each other through a fastener 43 and a metal joint 45. The negative electrode terminal 40 that is insulated from the lid 24 is secured by swaging to a portion of the lid 24 defining the peripheral edge of the terminal insertion hole 24h. The negative electrode terminal 40 is provided on its lower end with a rivet portion 40c. The negative electrode terminal 40 is secured to the lid 24 and electrically connected to the negative electrode lead member 14 by swaging.

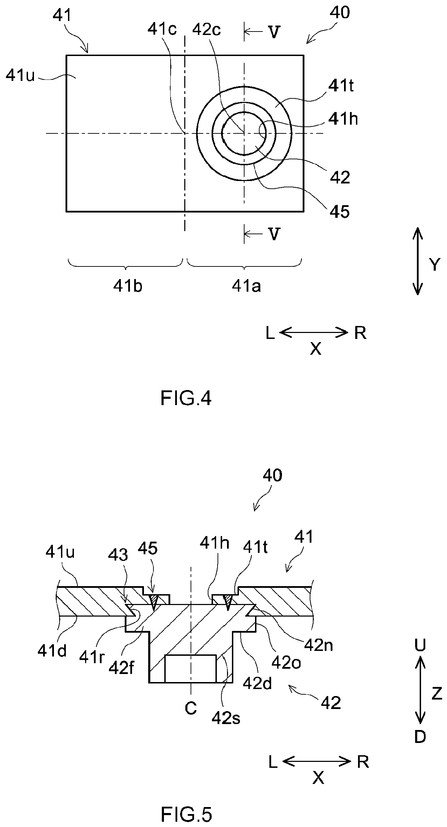

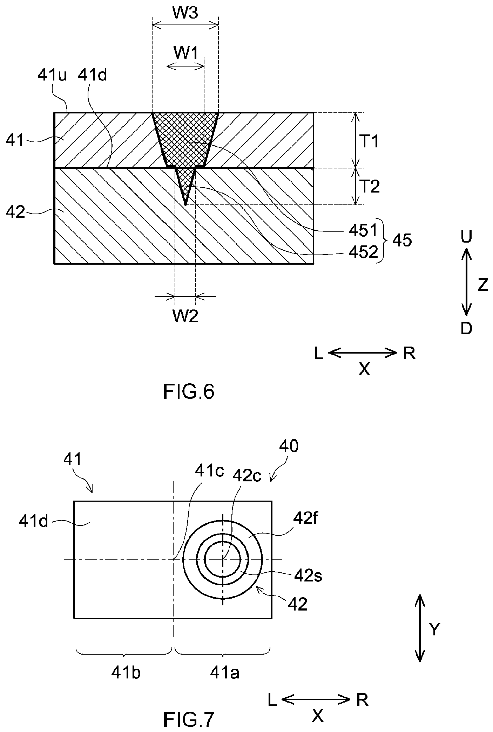

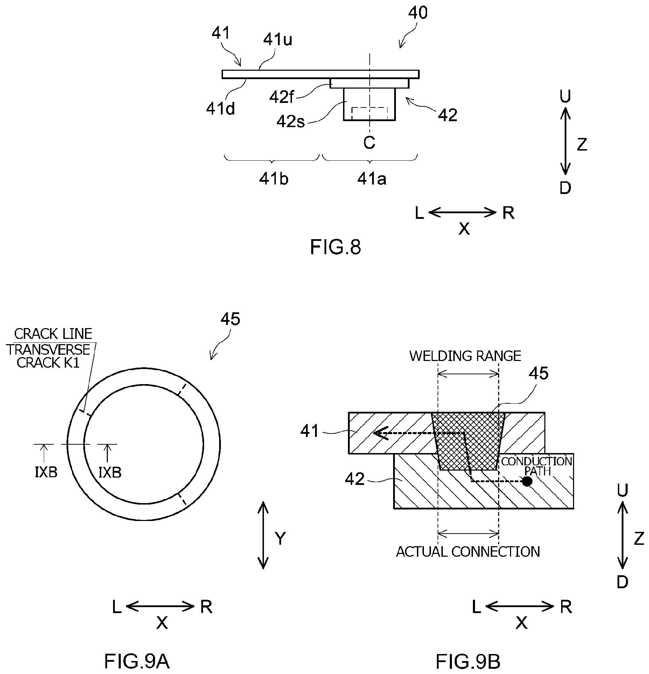

FIG. 4 is a schematic plan view of the negative electrode terminal 40 before being attached to the lid 24 (i.e., before being subjected to swaging). FIG. 5 is a schematic, vertical cross-sectional view of the negative electrode terminal 40 taken along the line V-V in FIG. 4. FIG. 5 is a vertical cross-sectional view of the negative electrode terminal 40, schematically illustrating main components of the negative electrode terminal 40. FIG. 6 is an enlarged view of the metal joint 45 illustrated in FIG. 5 and its adjacent region. FIG. 7 is a bottom view of the negative electrode terminal 40 illustrated in FIG. 4. FIG. 8 is a side view of the negative electrode terminal 40 illustrated in FIG. 4.

As illustrated in FIG. 5, the negative electrode terminal 40 includes the first conductive member 41, the second conductive member 42, the fastener 43, and the metal joint 45. The first conductive member 41 and the second conductive member 42 are integral with each other through the fastener 43 and the metal joint 45 and are electrically connected to each other.

The first conductive member 41 is disposed outside the battery case 20. In this embodiment, the first conductive member 41 is made of metal. The first conductive member 41 is made of, for example, a conductive metal, such as aluminum, an aluminum alloy, nickel, or stainless steel. The first conductive member 41 preferably contains aluminum or an aluminum alloy. In this embodiment, the first conductive member 41 is made of a metal lower in melting point than that used for the second conductive member 42. Aluminum has a melting point of 660°C. At least a portion of the first conductive member 41 located in the vicinity of the metal joint 45 is preferably made of aluminum or an aluminum alloy. In this embodiment, the first conductive member 41 is made of aluminum. The first conductive member 41 may be made of a metal similar to that used for the positive electrode lead member 13. Alternatively, the first conductive member 41 may be made of an alloy whose first component is a metallic element similar to that used for the positive electrode lead member 13. As used herein, the term "first component" refers to a component whose percentage by mass is the highest among the components of an alloy.

As illustrated in FIGS. 4 to 8, the first conductive member 41 has a plate shape. In this embodiment, the first conductive member 41 has a flat plate shape. The first conductive member 41 includes a lower surface 41d and an upper surface 41u. The lower surface 41d is a surface of the first conductive member 41 that faces the battery case 20 (or more specifically, the lid 24). The lower surface 41d is a surface of the first conductive member 41 that is in contact with the second conductive member 42. The upper surface 41u is a surface of the first conductive member 41 located away from the battery case 20 and the second conductive member 42. In this embodiment, the first conductive member 41 has a substantially rectangular shape. As illustrated in FIGS. 7 and 8, the first conductive member 41 is divided into two portions, i.e., a connection 41a and an extension 41b, adjoining each other in the longitudinal direction X. Specifically, the first conductive member 41 includes: the connection 41a electrically connected to the second conductive member 42; and the extension 41b extending to one side (i.e., leftward in FIGS. 4 to 8) in the longitudinal direction X from the connection 41a.

As illustrated in FIG. 5, the connection 41a includes: a thin portion 41t (see also FIG. 4) thinner than the extension 41b; a through hole 41h passing through the first conductive member 41 in the up-down direction Z; and a recess 41r recessed from the lower surface 41d of the first conductive member 41. The thin portion 41t is provided with the metal joint 45. As illustrated in FIG. 4, the thin portion 41t has an annular shape (e.g., a ring shape) in the plan view.

As illustrated in FIG. 4, the through hole 41h has a circular shape in the plan view. The second conductive member 42 (or more specifically, the flange 42f described below) is exposed at the upper surface 41u of the first conductive member 41 through the through hole 41h. As illustrated in FIG. 5, the through hole 41h is defined in the center of the thin portion 41t when viewed in cross section. The through hole 41h is disposed radially inward of the fastener 43 and the metal joint 45. The through hole 41h may function as an escape route for distortion caused by gas and/or heat produced during welding.

As illustrated in FIG. 5, the recess 41r is disposed radially outward of the metal joint 45. Although not illustrated, the recess 41r has an annular shape (e.g., a ring shape) in the plan view. In this embodiment, the recess 41r is tapered such that the recess 41r decreases in diameter as it extends to the lower surface 41d of the first conductive member 41 (or toward the lower end of the second conductive member 42). A constricted portion 42n (which will be described below) of the second conductive member 42 is inserted into the recess 41r.

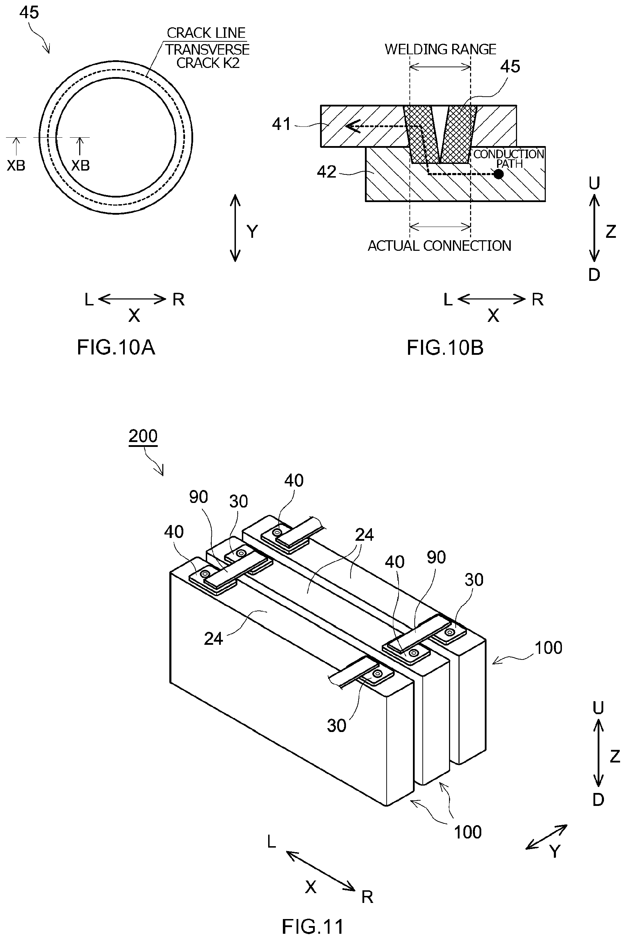

When a battery pack 200 (see FIG. 11) is fabricated by electrically connecting, for example, more than one battery 100 to each other, bus bars 90 (see FIG. 11), which are conductive members, are attached to the extensions 41b. Each first conductive member 41 including the extension 41b provides a sufficient area for contact with the associated bus bar 90, enabling the battery pack 200 to offer improved conduction reliability. As illustrated in FIGS. 4 and 7, each first conductive member 41 includes the extension 41b, so that a center 41c of each first conductive member 41 is shifted leftward in the longitudinal direction X relative to a center 42c of the associated second conductive member 42 (or more specifically, the center of the flange 42f described below). This facilitates attaching the bus bars 90 to the first conductive members 41 when the batteries 100 are electrically connected to each other through the bus bars 90. Consequently, the battery pack 200 is able to offer improved conduction reliability.

The second conductive member 42 extends from inside to outside of the battery case 20. In this embodiment, the second conductive member 42 is made of metal. The second conductive member 42 is made of, for example, a conductive metal, such as copper, a copper alloy, nickel, or stainless steel. The second conductive member 42 preferably contains copper or a copper alloy. In this embodiment, the second conductive member 42 is made of a metal higher in hardness than that used for the first conductive member 41. In this embodiment, the second conductive member 42 is made of a metal higher in melting point than that used for the first conductive member 41. The second conductive member 42 is made of, for example, a metal higher in melting point than that used for the first conductive member 41 by 300°C or more. Copper has a melting point of 1083°C. At least a portion of the second conductive member 42 located in the vicinity of the metal joint 45 is preferably made of copper or a copper alloy. In this embodiment, the second conductive member 42 is made of copper. The second conductive member 42 may be made of a metal similar to that used for the negative electrode lead member 14. Alternatively, the second conductive member 42 may be made of an alloy whose first component is a metallic element similar to that used for the negative electrode lead member 14. A portion or an entirety of a surface of the second conductive member 42 may be coated with a metal, such as Ni. This coating is able to enhance resistance to the electrolyte, resulting in improved corrosion resistance.

The second conductive member 42 preferably has a columnar shape. In this embodiment, the second conductive member 42 has a substantially circular cylindrical shape. As illustrated in FIGS. 5 and 8, the second conductive member 42 includes an axis C. The second conductive member 42 includes: the flange 42f electrically connected to the first conductive member 41; and the shaft column 42s connected to the lower end of the flange 42f.

The flange 42f is located on the upper end of the shaft column 42s protruding out of the battery case 20 through the terminal insertion hole 24h of the lid 24. The flange 42f is larger in outer dimension than the shaft column 42s. As illustrated in FIG. 3, the flange 42f is larger in outer dimension than the terminal insertion hole 24h of the lid 24. As illustrated in FIGS. 5, 7 and 8, the flange 42f in this embodiment has a substantially circular cylindrical outer shape. As illustrated in FIGS. 5 and 8, the axis of the flange 42f corresponds to the axis C of the second conductive member 42. As illustrated in FIG. 5, the flange 42f includes: the lower surface 42d; a side surface (or outer peripheral surface) 42o extending upward from the lower surface 42d; and the constricted portion 42n defined by a narrowed portion of the side surface 42o.

The constricted portion 42n is continuously or discontinuously provided on a portion of the side surface 42o of the flange 42f. Although not illustrated, the constricted portion 42n has an annular shape (e.g., a ring shape) in the plan view. The constricted portion 42n having an annular shape is able to increase the strength of the fastener 43. The constricted portion 42n is axisymmetric with respect to the axis C of the flange 42f. The constricted portion 42n is reversely tapered such that the constricted portion 42n increases in diameter toward the upper surface 41u (i.e., as the constricted portion 42n extends away from the shaft column 42s). The constricted portion 42n is inserted into the recess 41r of the first conductive member 41. In this embodiment, the constricted portion 42n is fitted into the recess 41r of the first conductive member 41. The constricted portion 42n is an example of the "portion of the second conductive member housed in the recess" disclosed herein.

As illustrated in FIG. 5, the shaft column 42s extends downward from the lower end of the flange 42f. As illustrated in FIGS. 5, 7 and 8, the shaft column 42s in this embodiment has a cylindrical shape. The axis of the shaft column 42s corresponds to the axis C of the flange 42f. Before swaging is performed, the lower end of the shaft column 42s (which is an end of the shaft column 42s located opposite to the flange 42f) is hollow. As illustrated in FIG. 3, the shaft column 42s is inserted through the terminal insertion hole 24h of the lid 24 when the negative electrode terminal 40 is attached to the lid 24. When the negative electrode terminal 40 is attached to the lid 24, the lower end of the shaft column 42s is spread out by swaging so as to provide the rivet portion 40c. As a result of swaging, the shaft column 42s is electrically connected to the negative electrode lead member 14 inside the battery case 20.

The fastener 43 is a connector that mechanically secures the first conductive member 41 and the flange 42f of the second conductive member 42 to each other. Although described in detail below, the present embodiment involves providing the fastener 43 serving as the connector and thus would provide sufficiently high connection strength if penetration of the second conductive member 42 is reduced in the metal joint 45. Although not illustrated, the fastener 43 has an annular shape (e.g., a ring shape) in the plan view. This increases the strength of the fastener 43 so as to further improve the conduction reliability of the negative electrode terminal 40. In this embodiment, the fastener 43 is formed continuously. As illustrated in FIG. 5, the fastener 43 in this embodiment is defined by the recess 41r and the constricted portion 42n disposed radially outward of the metal joint 45 when viewed in cross section. In this embodiment, the fastener 43 is provided in the lower surface 41d of the first conductive member 41. Specifically, an inner wall of the recess 41r of the first conductive member 41 is secured (e.g., pressed and secured) with the constricted portion 42n of the second conductive member 42 so as to provide the fastener 43. The fastener 43 provided in this manner is increased in strength.

The fastener 43 may be formed by any method that involves establishing a mechanical connection by using mechanical energy. Examples of the method for forming the fastener 43 include press-fitting, swaging, shrinkage fitting, riveting, folding, and bolting. In some preferred modes, the fastener 43 is a fitted portion in which the recess 41r of the first conductive member 41 and the constricted portion 42n of the second conductive member 42 are fitted to each other. Such fitting would suitably secure the first conductive member 41 and the second conductive member 42 to each other if the first conductive member 41 and the second conductive member 42 are made of, for example, different metals. The fastener 43 may be, for example, a press-fitted portion in which the constricted portion 42n of the second conductive member 42 is press-fitted into the recess 41r of the first conductive member 41.

The metal joint 45 is a metallurgical joint between the first conductive member 41 and the flange 42f of the second conductive member 42. As illustrated in FIG. 5, the metal joint 45 in this embodiment is provided in the upper surface 41u (more specifically, the thin portion 41t) of the first conductive member 41. The metal joint 45 is disposed away from the through hole 41h. The metal joint 45 is disposed radially outward of the through hole 41h. The metal joint 45 is disposed away from the fastener 43. This makes it possible to reduce the influence of heat on the fastener 43 and/or other component(s). The metal joint 45 may be relatively more rigid than, for example, the fastener 43.

As indicated by FIG. 5, the metal joint 45 in this embodiment is disposed radially inward of (i.e., closer to the center of the flange 42f than) the fastener 43 in the plan view. In other words, the metal joint 45 is disposed closer to the center 42c of the second conductive member 42 than the fastener 43. Because the metal joint 45 is formed by using, for example, light energy, electronic energy, or thermal energy, the metal joint 45 may be relatively lower in strength than (or more brittle than) the fastener 43. The metal joint 45 disposed radially inward of the fastener 43 as described above is maintained in a stable state, making it possible to keep the conduction reliability of the negative electrode terminal 40 at a high level for a long period of time. In this embodiment, the metal joint 45 is provided in the thin portion 41t. Accordingly, this embodiment requires less energy in forming the metal joint 45 and provides improved weldability when the metal joint 45 is formed by welding. The metal joint 45 is formed continuously or discontinuously. The metal joint 45 is axisymmetric with respect to the axis C of the flange 42f.

As illustrated in FIG. 4, the metal joint 45 has an annular shape (e.g., a ring shape) in the plan view. This increases the strength of the metal joint 45 so as to further improve the conduction reliability of the negative electrode terminal 40. In this embodiment, the metal joint 45 is provided along the entire circumference of an imaginary circle drawn around the center 42c of the flange 42f. Alternatively, the metal joint 45 may have any other shape, such as a C-shape, a semi-arc shape, a linear shape, or a dashed shape in the plan view. The metal joint 45 is provided around the axis C of the flange 42f such that the metal joint 45 surrounds the outer edge of the through hole 41h. Providing the metal joint 45 around the peripheral edge of the through hole 41h enables distortion and/or deformation caused by heat during welding to escape to the through hole 41h, making it possible to reduce the influence of such distortion and/or deformation on the fastener 43 and/or other components(s).

The metal joint 45 is formed by performing welding such that portions of the first conductive member 41 and the second conductive member 42 are molten, fused together, and then solidified. A portion resulting from this welding will be referred to as a "fused and solidified portion". Accordingly, the metal joint 45 includes the fused and solidified portion. As illustrated in FIG. 6, the fused and solidified portion includes: a first sub-portion 451 formed in the first conductive member 41; and a second sub-portion 452 formed in the second conductive member 42. In the first sub-portion 451, constituent elements (such as Cu) of the second conductive member 42 are fused into constituent elements (such as Al) of the first conductive member 41. In the second sub-portion 452, the constituent elements (such as Al) of the first conductive member 41 are fused into the constituent elements (such as Cu) of the second conductive member 42. Because the fused and solidified portion includes the first sub-portion 451 and the second sub-portion 452, this embodiment is able to relatively easily and stably provide the metal joint 45 of high strength. In the following description, the metal joint and the fused and solidified portion will be identified by the same reference sign. The metal joint 45 (or the fused and solidified portion 45) may be formed by any welding method. The metal joint 45 (or the fused and solidified portion 45) may be formed by, for example, laser welding, electron beam welding, ultrasonic welding, resistance welding, or tungsten inert gas (TIG) welding. Preferable welding conditions will be discussed in connection with a manufacturing method described below.

Studies conducted by the inventors suggest that welding or application of external force (such as vibrations and/or an impact) may cause cracks in the fused and solidified portion 45. Such cracks will be described in detail with reference to FIGS. 9A, 9B, 10A, and 10B. As illustrated in FIGS. 9A and 10A, cracks in the fused and solidified portion 45 are broadly divided into: transverse cracks K1 (see FIG. 9A) that occur substantially perpendicularly to a weld line (i.e., a welding proceeding direction); and a longitudinal crack K2 (see FIG. 10A) that occurs substantially horizontally to the weld line.

Although cracks may result from any cause, the transverse cracks K1 are believed to occur, for example, when a portion of a welding target region located rearward in the welding proceeding direction is solidified first during welding, resulting in separation between a solid phase and a liquid phase. In particular, when a welding target region contains a high percentage of the second conductive member 42 (Cu) having a relatively high melting point, a portion of the welding target region located rearward in the welding proceeding direction is presumed to be solidified quickly during formation of the fused and solidified portion 45, making it more likely that the transverse cracks K1 will occur. FIG. 9B is a cross-sectional view of the fused and solidified portion 45 taken along the line IXB-IXB in FIG. 9A. Studies conducted by the inventors indicate that although the transverse cracks K1 are undesirable, the transverse cracks K1 extend radially along a surface of the fused and solidified portion 45 and do not reach deep into the fused and solidified portion 45 as illustrated in FIGS. 9A and 9B. Thus, the transverse cracks K1 have a low risk of decreasing the area of actual connection between the first conductive member 41 and the second conductive member 42 relative to a welding range and narrowing a conduction path between the first conductive member 41 and the second conductive member 42. Accordingly, the transverse cracks K1 are allowable.

The longitudinal crack K2 is believed to occur, for example, during welding or upon application of external force. The occurrence of the longitudinal crack K2 is believed to start from the transverse crack K1 that has occurred earlier. In particular, if the fusion area of the second conductive member 42 (Cu) having a relatively high melting point is large in the fused and solidified portion 45, the amount of heat increases. Thus, the fused and solidified portion 45 decreases in strength and becomes brittle as alloying of the second conductive member 42 (Cu) with the first conductive member 41 (Al) proceeds. In addition, if thermal contraction of the first conductive member 41 (Al) proceeds to a significant degree, the fused and solidified portion 45 fails to follow the thermal contraction. This presumably makes it likely that the longitudinal crack K2 will occur. FIG. 10B is a cross-sectional view of the fused and solidified portion 45 taken along the line XB-XB in FIG. 10A. Studies conducted by the inventors reveal that the longitudinal crack K2 extends not only along the surface of the fused and solidified portion 45 but also in a vertical direction and reaches deep into the fused and solidified portion 45 as illustrated in FIG. 10B. The longitudinal crack K2 thus has a high risk of decreasing the area of actual connection between the first conductive member 41 and the second conductive member 42 relative to the welding range and narrowing the conduction path between the first conductive member 41 and the second conductive member 42.

On the basis of the above findings, penetration of the second conductive member 42 (Cu) is reduced to a low level in the fused and solidified portion 45 according to the present embodiment. Specifically, the ratio of the second sub-portion 452 to the first sub-portion 451 is reduced such that the area of the second sub-portion 452 is kept to 35% or less of the area of the first sub-portion 451 when viewed in cross section. In other words, the penetration area of the second conductive member 42 (or in particular, Cu) is kept to 35% or less of the penetration area of the first conductive member 41 (or in particular, Al) in the fused and solidified portion 45. This makes it possible to effectively reduce or prevent occurrence of the longitudinal crack K2 in the fused and solidified portion 45. As a result, the present embodiment is able to provide a sufficiently large area for actual connection between the first conductive member 41 and the second conductive member 42 so as to maintain a wide conduction path between the first conductive member 41 and the second conductive member 42. Because the present embodiment involves providing not only the fused and solidified portion 45 but also the fastener 43, the present embodiment would enable the connectors to have suitable connection strength if the area of the second sub-portion 452 is decreased and penetration of the second conductive member 42 is reduced as mentioned above.

The percentage of the area of the second sub-portion 452 to the area of the first sub-portion 451 (which will hereinafter be referred to as a "cross-sectional area percentage") is preferably 33% or less, more preferably 30% or less, and still more preferably 20% or less. The present embodiment is thus able to suitably reduce or prevent not only occurrence of the longitudinal crack K2 but also occurrence of the transverse cracks K1, making it possible to preclude the possibility of occurrence of the longitudinal crack K2. The cross-sectional area percentage may be substantially 0% (which means that the second sub-portion 452 is present only at an interface of the second conductive member 42 with the first conductive member 41). From the viewpoint of improving the strength and durability of the fused and solidified portion 45, however, the cross-sectional area percentage may typically be 1% or more, may be about 2% or more, may alternatively be 4% or more, or may be 5% or more, for example. The areas of the first and second sub-portions 451 and 452 of the fused and solidified portion 45 are calculated from an image of a cross section of the fused and solidified portion 45 taken along the axis C of the flange 42f. A method for calculating the areas of the first and second sub-portions 451 and 452 will be discussed in detail in connection with examples described below.

The fused and solidified portion 45 may be formed into any shape. In the mode illustrated in FIG. 6, the fused and solidified portion 45 tapers as it extends away from a surface of the first conductive member 41 to which energy for welding has been applied (i.e., as the fusion depth of the fused and solidified portion 45 increases). When viewed in cross section, a width W1 (mm) of an end of the first sub-portion 451 (i.e., its lower end in FIG. 6) in contact with the second conductive member 42 and a width W2 (mm) of an end of the second sub-portion 452 (i.e., its upper end in FIG. 6) in contact with the first conductive member 41 preferably have the following relationship: W2 < W1. This makes it difficult for Cu contained in the second conductive member 42 to penetrate into the first sub-portion 451. As a result, occurrence of the transverse cracks K1 is effectively reduced, making it possible to provide the negative electrode terminal 40 that offers lower resistance and higher conduction reliability. The ratio of the width W2 to the width W1 (which will hereinafter be referred to as a "ratio W2/W1") may be any ratio because the ratio W2/W1 may vary depending on, for example, welding conditions and/or the thickness of the thin portion 41t. In one example, the ratio W2/W1 is preferably 2/3 or less and more preferably 1/2 or less. Setting the ratio W2/W1 at or below a predetermined value (i.e., increasing the difference between the width W1 and the width W2) makes it possible to effectively reduce or prevent occurrence of the transverse cracks K1 and thus preclude the possibility of occurrence of the longitudinal crack K2. Consequently, the present embodiment is able to stably provide the negative electrode terminal 40 that offers low resistance and high conduction reliability.

When viewed in cross section, the width W1 (mm) and a width W3 (mm) of an end of the first sub-portion 451 (i.e., its upper end in FIG. 6) located away from the second conductive member 42 preferably have the following relationship: W1 < W3. The ratio of the width W1 to the width W3 (which will hereinafter be referred to as a "ratio W1/W3") may be any ratio because the ratio W1/W3 may vary depending on, for example, welding conditions and/or the thickness of the thin portion 41t. The ratio W1/W3 may be, for example, between 0.6 and 0.9 or may alternatively be between 0.6 and 0.85. Accordingly, the present embodiment is able to more effectively reduce or prevent occurrence of cracks in the fused and solidified portion 45 and thus provide the negative electrode terminal 40 that offers lower resistance and higher conduction reliability. The widths W1, W2, and W3 may be set by adjusting welding conditions (e.g., a laser output, whether or not wobbling is to be performed, and a wobbling frequency), which will be described below.

The percentage of Cu content in the first sub-portion 451 is preferably 30% or less by mass. Reducing penetration of Cu, which is contained in the second conductive member 42, into the first sub-portion 451 makes it possible to effectively prevent or reduce occurrence of the longitudinal crack K2. The percentage of Cu content in the first sub-portion 451 is more preferably 25% or less by mass, and may be between, for example, 15% and 25% by mass. This makes it possible to effectively reduce or prevent occurrence of the transverse cracks K1 and thus preclude the possibility of occurrence of the longitudinal crack K2. Accordingly, the present embodiment is able to stably provide the negative electrode terminal 40 that offers low resistance and high conduction reliability. A lower limit to the percentage of Cu content in the first sub-portion 451 may be any value. The lower limit may be substantially 0%. The lower limit may typically be 1% or more, may be about 5% or more, may alternatively be 8% or more, or may be 10% or more, for example.

Cu may be distributed in the first sub-portion 451 uniformly or non-uniformly. In one example, the percentage of Cu content may be high in a region of the first sub-portion 451 relatively close to the second conductive member 42 when viewed in cross section. In another example, the percentage of Cu content may be lower in the right and left ends of the first sub-portion 451 than in the center of the first sub-portion 451 when viewed in cross section. The percentage of Cu content described above may be set by adjusting welding conditions (e.g., a laser output, whether or not wobbling is to be performed, and a wobbling frequency), which will be described below. A method for measuring the percentage of Cu content will be discussed in detail in connection with the examples described below.

As illustrated in FIG. 6, a fusion depth T2 (mm) of the second sub-portion 452 is preferably smaller than a fusion depth T1 (mm) of the first sub-portion 451 when viewed in cross section (i.e., the fusion depths T1 and T2 preferably have the following relationship: T2 < T1). In other words, the depth of penetration into the second conductive member 42 is preferably smaller than the depth of penetration into the first conductive member 41 in the fused and solidified portion 45. This makes it possible to more effectively prevent or reduce occurrence of the longitudinal crack K2 and thus stably provide the negative electrode terminal 40 that offers low resistance and high conduction reliability. The fusion depth T1 of the first sub-portion 451 corresponds to the thickness of a region of the first conductive member 41 in which the first sub-portion 451 is formed. In this embodiment, the fusion depth T1 of the first sub-portion 451 is equal to the thickness of the thin portion 41t. The ratio of the fusion depth T2 of the second sub-portion 452 to the fusion depth T1 of the first sub-portion 451 (which will hereinafter be referred to as a "ratio T2/T1") may be any ratio because the ratio T2/T1 may vary depending on, for example, welding conditions and/or the thickness of the thin portion 41t. In one example, the ratio T2/T1 is preferably 2/3 or less and more preferably 1/3 or less. Alternatively, the fusion depths T1 and T2 may have the following relationship: T1 = T2. Optionally, the fusion depths T1 and T2 may have the following relationship: T1 < T2. The fusion depths T1 and T2 described above may be set by adjusting welding conditions (e.g., a laser output, whether or not wobbling is to be performed, and a wobbling frequency), which will be described below.

As described above, the negative electrode terminal 40 includes two types of connectors, i.e., the fastener 43 and the metal joint 45, which make connections in different ways. Thus, if vibrations and/or an impact, for example, are/is externally applied to the negative electrode terminal 40, the negative electrode terminal 40 would be unlikely to be distorted or deformed, and intimate contact between the first conductive member 41 and the second conductive member 42 would be likely to be maintained. In other words, the first conductive member 41 and the second conductive member 42 are unlikely to be separated from each other. Accordingly, a conductive connection between the first conductive member 41 and the second conductive member 42 is stably maintainable. Reducing the ratio of the cross-sectional area of the second sub-portion 452 to the cross-sectional area of the first sub-portion 451 (i.e., reducing penetration of Cu, which is contained in the second conductive member 42, into the first conductive member 41) makes it possible to prevent or reduce occurrence of the longitudinal crack K2 and thus provide a wide conduction path between the first conductive member 41 and the second conductive member 42. Consequently, the present embodiment is able to reduce conduction resistance, resulting in reduced resistance of the battery 100. The present embodiment is also able to reduce heat generated by resistance of the fused and solidified portion 45 so as to reduce thermal effects on resin member(s), such as the gasket 50. In addition, the present embodiment is able to improve strength and durability of the fused and solidified portion 45. The techniques disclosed herein achieve these advantageous effects and are thus able to provide the battery 100 including the negative electrode terminal 40 that offers low resistance and improved conduction reliability.

### Method for Manufacturing Negative Electrode Terminal 40

The negative electrode terminal 40 may be manufactured by any method. The negative electrode terminal 40 may be manufactured by, for example, a manufacturing method that involves preparing the first conductive member 41 and the second conductive member 42 described above and includes a fastening step and a welding step. The fastening step and the welding step may be performed in any order. From the viewpoint of preventing or reducing damage to the fused and solidified portion 45 during formation of the fastener 43, the welding step is preferably performed after the fastening step. Alternatively, the fastening step may be performed after the welding step, or both of the steps may be performed substantially simultaneously. The manufacturing method disclosed herein may further include other step(s) at any stage(s).

The fastening step involves mechanically securing the first conductive member 41 and the flange 42f of the second conductive member 42 to each other so as to form the fastener 43. In one example, the fastener 43 may be formed by inserting the constricted portion 42n of the second conductive member 42 into the recess 41r of the first conductive member 41, and deforming the recess 41r of the first conductive member 41 along the outer shape of the constricted portion 42n of the second conductive member 42 so as to secure the inner wall of the recess 41r with the second conductive member 42. This makes it possible to increase the strength of the resulting fastener 43. In some preferred modes, the fastener 43 is formed by fitting the recess 41r of the first conductive member 41 and the constricted portion 42n of the second conductive member 42 to each other. The fastener 43 may be formed by, for example, horizontally press-fitting the constricted portion 42n of the second conductive member 42 to the recess 41r of the first conductive member 41. Such press-fitting is able to improve the workability of the fastening step.

The welding step involves welding the thin portion 41t of the first conductive member 41 and the flange 42f of the second conductive member 42 to each other so as to form the fused and solidified portion 45. Performing the welding step after the fastening step makes it possible to accurately form the fused and solidified portion 45 stable in shape. In one example, the fused and solidified portion 45 may be formed by welding that involves applying a beam of energy to the thin portion 41t of the first conductive member 41, with the thin portion 41t located on the flange 42f of the second conductive member 42, such that the energy passes through the thin portion 41t and reaches the flange 42f. Welding in this case is preferably performed by using any of the above-mentioned methods (e.g., by applying an energy beam, such as a laser).

Although any type of laser may be used, a single mode fiber laser may be used suitably. Laser conditions (e.g., a laser output, whether or not wobbling is to be performed, a wobbling frequency, and a linear velocity) are appropriately adjustable in accordance with, for example, the materials for the first conductive member 41 and the second conductive member 42 and/or the thickness of the first conductive member 41. In one example, the laser output is preferably between about 500 W and about 1500 W, more preferably 1300 W or less, and still more preferably between 600 W and 900 W. It is preferable that no wobbling is performed. When wobbling is performed, the wobbling frequency is preferably about 1000 Hz or less (e.g., between 100 Hz and 600 Hz). The linear velocity is preferably between about 10 mm/s and about 2000 mm/s and more preferably between 50 mm/s and 1000 mm/s. Satisfying these conditions enables stable fusion of the second conductive member 42 (Cu), which is relatively difficult to fuse. Satisfying these conditions also prevents the fusion depth from becoming excessively great, making it possible to reduce penetration of Cu contained in the second conductive member 42.

In this embodiment, the manufacturing method involves forming the fused and solidified portion 45 located radially inward of the fastener 43. The manufacturing method thus makes it unlikely that a connection position will deviate, resulting in an improvement in the workability of the welding step. When the fused and solidified portion 45 is to be formed by welding, the manufacturing method makes it unlikely that a welding position will become unsteady, leading to an improvement in weldability. When the thin portion 41t to be welded, the manufacturing method requires less energy, resulting in an improvement in weldability.

### Method for Manufacturing Battery 100

A method for manufacturing the battery 100 is characterized by including the method for manufacturing the negative electrode terminal 40, which has been described above. Other manufacturing processes included in the method for manufacturing the battery 100 may be similar to those included in battery manufacturing methods known in the related art. The battery 100 may be manufactured by, for example, a manufacturing method that involves preparing the electrode body 10, the electrolyte, the case body 22, the lid 24, the positive electrode terminal 30, and the negative electrode terminal 40, which have been described above, and that includes an attaching step and a connecting step.

The attaching step involves attaching the positive electrode terminal 30, the positive electrode lead member 13, the negative electrode terminal 40, and the negative electrode lead member 14 to the lid 24. As illustrated, for example, in FIG. 3, the negative electrode terminal 40 and the negative electrode lead member 14 are secured to the lid 24 by swaging (or riveting). Swaging in this case involves interposing the gasket 50 between the negative electrode terminal 40 and the lid 24, and interposing the insulator 60 between the lid 24 and the negative electrode lead member 14. To be more specific, from above the lid 24, the shaft column 42s of the negative electrode terminal 40 yet to be swaged is passed through the tubular portion 51 of the gasket 50, the terminal insertion hole 24h of the lid 24, the through hole 60h of the insulator 60, and the through hole 14h of the negative electrode lead member 14 in this order such that the shaft column 42s protrudes below the lid 24. The shaft column 42s protruding below the lid 24 is then swaged such that compressive force is applied to the shaft column 42s in the up-down direction Z. The rivet portion 40c is thus formed on an end of the shaft column 42s (which is its lower end in FIG. 3) of the negative electrode terminal 40.

As a result of such swaging, the base portion 52 of the gasket 50 and the flat portion of the insulator 60 are compressed, so that the gasket 50, the negative electrode terminal 40, the insulator 60, and the negative electrode lead member 14 are secured to the lid 24 so as to be integral therewith, thus sealing off the terminal insertion hole 24h. The positive electrode terminal 30 and the positive electrode lead member 13 may be attached to the lid 24 in a manner similar to that described for the negative electrode terminal 40 and the negative electrode lead member 14. The negative electrode lead member 14 is welded to the negative electrode collector exposed portion of the negative electrode collector 12, so that the negative electrode of the electrode body 10 is electrically connected to the negative electrode terminal 40. Similarly, the positive electrode lead member 13 is welded to the positive electrode collector exposed portion of the positive electrode collector 11, so that the positive electrode of the electrode body 10 is electrically connected to the positive electrode terminal 30. Consequently, the lid 24, the positive electrode terminal 30, the negative electrode terminal 40, and the electrode body 10 are integral with each other.

The connecting step involves housing the electrode body 10, which is integral with the lid 24, in the inner space of the case body 22, and sealing off the case body 22 with the lid 24. The case body 22 may be sealed off by, for example, welding (e.g., laser-welding) the lid 24 to the case body 22. Subsequently, a nonaqueous electrolyte solution is poured into the case body 22 through an inlet (not illustrated), and the inlet is closed so as to hermetically seal the battery 100. As a result of performing these steps, the battery 100 is manufactured.

The battery 100 is usable for various purposes. The battery 100 is suitably usable for purposes that may involve application of external force (such as vibrations and/or an impact) during use. The battery 100 may typically find suitable use as a motor power source (e.g., a driving power supply) to be installed on any of various vehicles (e.g., a passenger car and a truck). The battery 100 may be installed on any type of vehicle, examples of which include, but are not limited to, a plug-in hybrid electric vehicle (PHEV), a hybrid electric vehicle (HEV), and a battery electric vehicle (BEV). As illustrated in FIG. 11, the batteries 100 may be electrically connected to each other through the bus bars 90 and may thus be suitably used as the battery pack 200. In this case, electric connections between the batteries 100 may be made by, for example, placing the bus bars 90, each having a flat plate shape, between the extensions of the first conductive members of the positive and negative electrode terminals 30 and 40 included in the batteries 100 adjacent to each other. The bus bars 90 are made of, for example, a conductive metal, such as aluminum, an aluminum alloy, nickel, or stainless steel. The bus bars 90 may be electrically connected to the extensions by, for example, welding (such as laser welding).

The following description discusses Examples 1 to 4 and a comparative example related to the present application but is not intended to limit the present application to these examples.

### Formation of Fused and Solidified Portion

First, first plate materials each made of aluminum (A1050) and having a thickness of 0.6 mm were prepared in imitation of first conductive members, and second plate materials each made of copper (C1100) and having a thickness of 1.0 mm were prepared in imitation of second conductive members. In each of the examples below, the first and second plate materials were placed on top of another, and a single mode fiber laser was applied to the first plate material such that welding was performed under the conditions given in Table 1 below. Welding was performed under the conditions given in Table 1 such that ten samples were obtained for each of the examples below. The laser was applied for the same period of time during welding in the examples below. Fused and solidified portions were thus formed for the examples below. Using a VHX-7000 series microscope manufactured by KEYENCE CORPORATION, the fused and solidified portions were each magnified by 150 times and observations were made to determine whether cracks (such as longitudinal and transverse cracks) appeared in the fused and solidified portions. The results of the observations are given in Table 2 below.

**Table 1 (Welding Conditions)**

| | Central Velocity (mm/sec) | Wobbling Diameter (mm) | Wobbling Frequency (Hz) | Linear Velocity (mm/sec) | Output (W) |
|---|---|---|---|---|---|
| Example 1 | 62 | 0.58 | None | 62 | 900 |
| Example 2 | 62 | 0.58 | 100 | 188 | 900 |
| Example 3 | 62 | 0.58 | 600 | 908 | 900 |
| Example 4 | 62 | 0.58 | 100 | 188 | 1300 |
| Comparative Example | 62 | 0.58 | 600 | 908 | 1300 |

### Observation on Cross Section of Fused and Solidified Portion

Regions of each pair of the first and second plate materials in which the fused and solidified portion was formed were cut in cross section along the center of the fused and solidified portion more than once (i.e., five times in this case) and were embedded and polished so as to create observation samples. Subsequently, the observation samples created were each subjected to an etching process using a corrosive solution so as to discolor the fused and solidified portion such that the boundary of the discoloration appeared discernibly. The corrosive solution was prepared by mixing ammonia (which was diluted with water to a concentration of 14%) and hydrogen peroxide (which was diluted with water to a concentration of 0.35%) at a ratio of 1:1 and stirring the resulting mixture. Cross-sectional images of the observation samples were then captured by using a scanning electron microscope (SEM) in a Hitachi's electron microscope system SU1000. Measurement conditions were as follows:
an accelerating voltage of 15 kV;
a spot strength of 90; and
a focus distance of 10 mm.

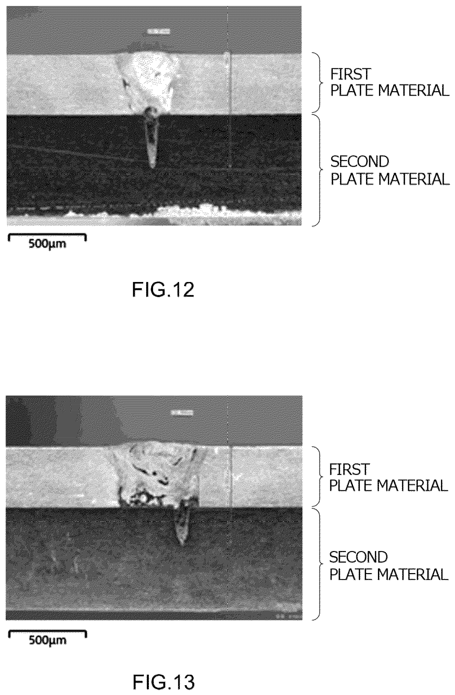

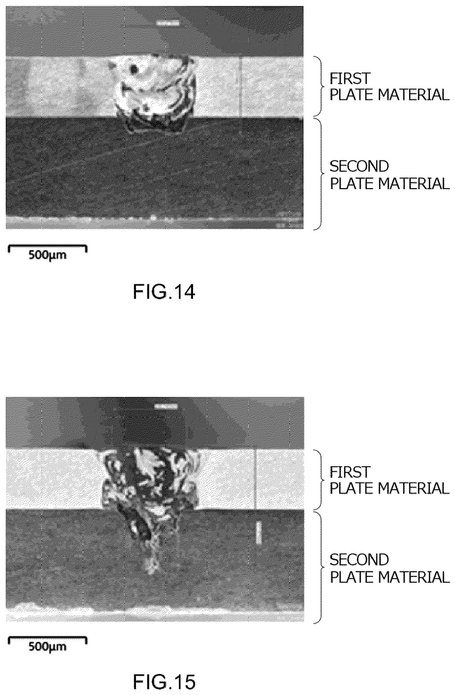

The cross-sectional images of Examples 1 to 4 and the comparative example are respectively presented in FIGS. 12 to 16. The cross-sectional images captured were subsequently subjected to image processing so as to determine the areas of the first and second sub-portions of each fused and solidified portion when viewed in cross section, and the ratio between the areas of the first and second sub-portions of each fused and solidified portion was calculated. The results of the calculations are given in Table 2 below. From each of the cross-sectional images captured, measurements were made of: the fusion depth T2 (mm) of the second sub-portion; the width W1 (mm) of an end (i.e., the lower end) of the first sub-portion in contact with the second conductive member; the width W2 (mm) of an end (i.e., the upper end) of the second sub-portion in contact with the first conductive member; and the width W3 (mm) of an end (i.e., the upper end) of the first sub-portion located away from the second conductive member. The ratio T2/T1, the ratio W2/W1, and the ratio W1/W3 were then calculated. The results of the calculations are given in Table 2 below.

### Calculation of Percentage of Cu Content in First Sub-Portion

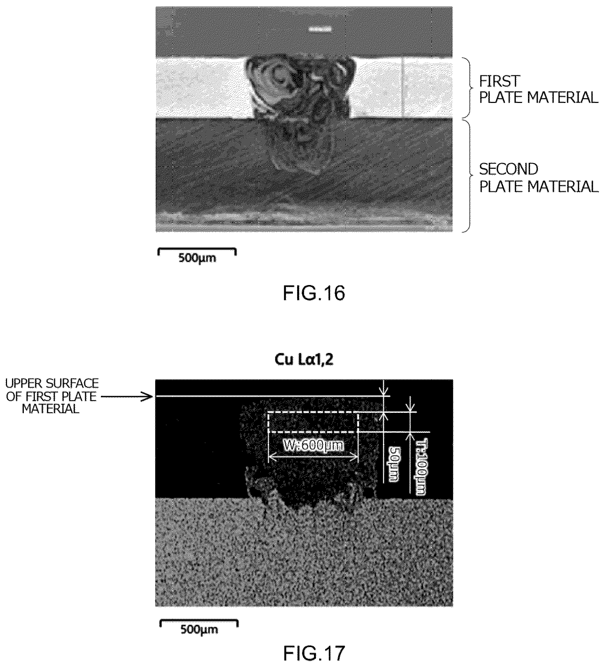

Using an energy dispersive X-ray Spectroscopy (EDXS), an analysis was conducted on each of the cross-sectional images captured so as to calculate the percentage of Cu content in the first sub-portion. Specifically, elements were mapped on each of the cross-sectional images captured. By way of typical example, FIG. 17 presents a Cu mapping image for Example 3. Subsequently, a surface analysis was conducted on a measurement target region (which is indicated by the broken line in FIG. 17) so as to determine the content of each type of element. The percentage of Cu content (i.e., the percentage of Cu by mass) was then calculated using the following equation: Percentage of Cu Content = Cu Content/(Cu Content + Al Content + ...). The results of the calculations are given in Table 2 below. As indicated in FIG. 17, the upper end of the measurement target region is located at a distance of 50 µm from the upper surface of the first plate material (i.e., a surface of the first plate material exposed to the laser), the center of the measurement target region in its width direction corresponds to the center of the fused and solidified portion in its width direction, and the measurement target region has a height T of 100 µm (which is measured between the upper and lower ends of the measurement target region) and a width W of 600 µm (which is measured between the right and left ends of the measurement target region).

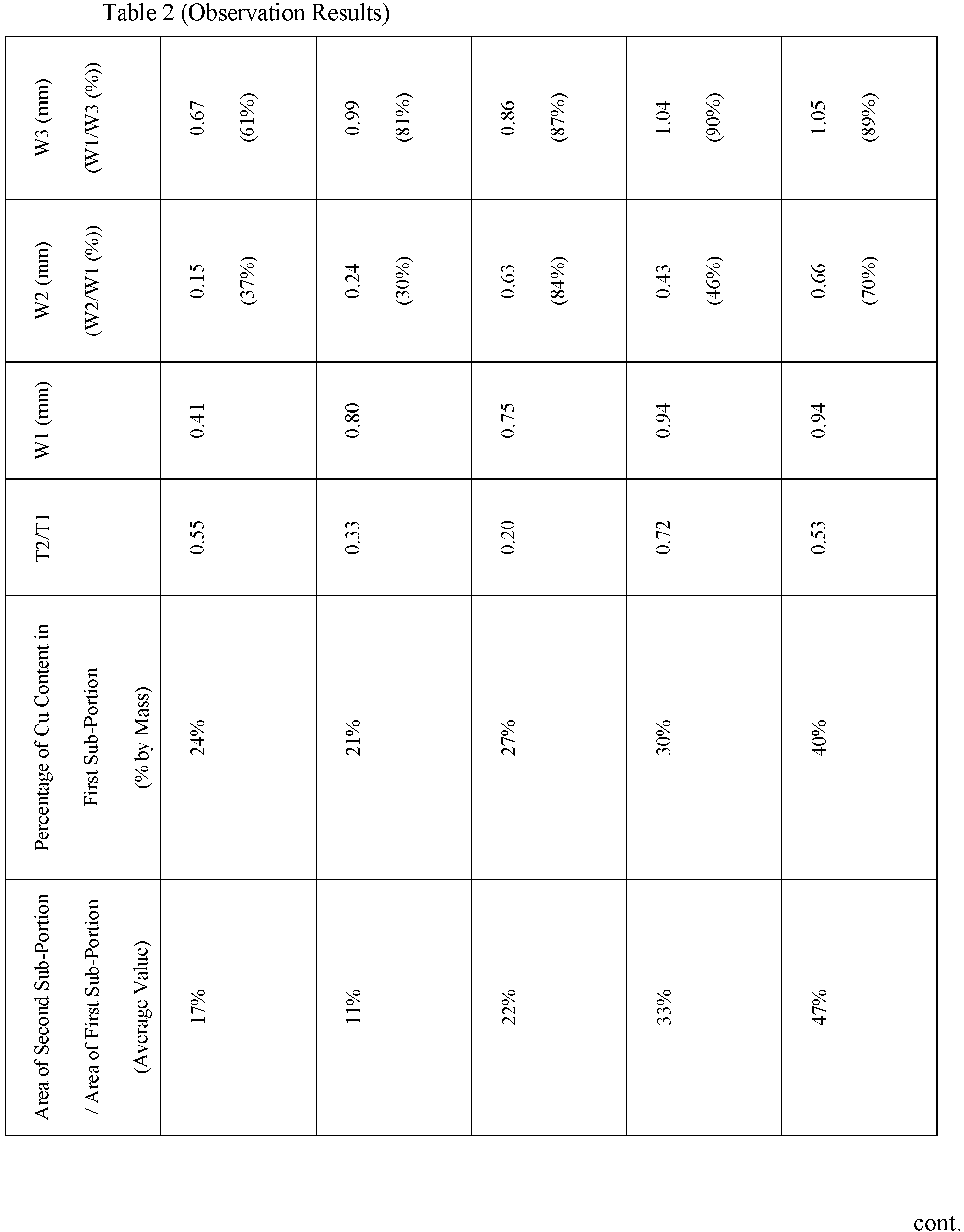

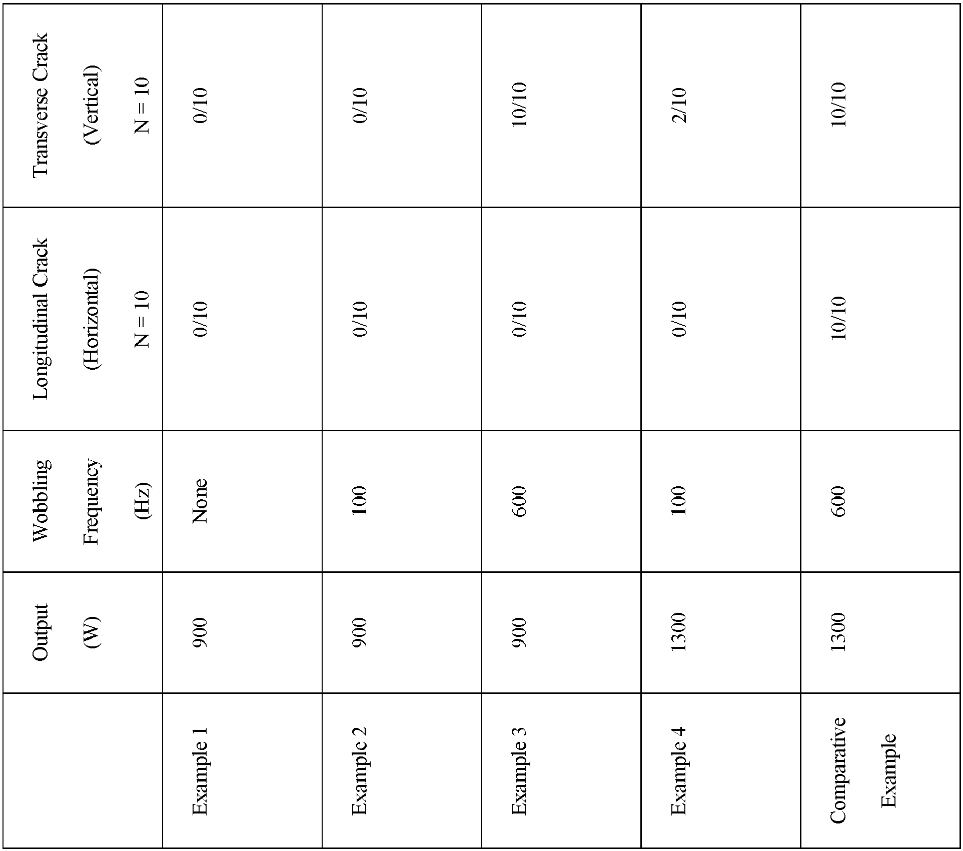

As indicated in Table 2, occurrence of longitudinal cracks was effectively prevented by keeping the cross-sectional area percentage (i.e., the percentage of the area of the second sub-portion to the area of the first sub-portion) to 35% or less. Occurrence of transverse cracks was also prevented by keeping the cross-sectional area percentage to 20% or less. Occurrence of longitudinal cracks was effectively prevented by keeping the percentage of Cu content in the first sub-portion to 30% or less by mass such that penetration of Cu is reduced. Occurrence of transverse cracks was also prevented by keeping the percentage of Cu content to 25% or less by mass. These results indicate the significance of the techniques disclosed herein.

Although the preferred embodiment of the present application has been described thus far, the foregoing embodiment is only illustrative, and the present application may be embodied in various other forms. The present application may be practiced based on the disclosure of this specification and technical common knowledge in the related field. The techniques described in the claims include various changes and modifications made to the embodiment illustrated above. Any or some of the technical features of the foregoing embodiment, for example, may be replaced with any or some of the technical features of variations of the foregoing embodiment. Any or some of the technical features of the variations may be added to the technical features of the foregoing embodiment. Unless described as being essential, the technical feature(s) may be optional.

### REFERENCE SIGNS LIST

- 10: electrode body
- 14: negative electrode lead member
- 20: battery case
- 24: lid
- 24h: terminal insertion hole
- 40: negative electrode terminal
- 40c: rivet portion
- 41: first conductive member
- 42: second conductive member
- 43: fastener
- 45: metal joint (fused and solidified portion)
- 451: first sub-portion
- 452: second sub-portion
- 100: battery

## Claims

1. A battery (100) comprising a terminal (40), wherein
the terminal (40) includes
a first conductive member (41) having a plate shape,
a second conductive member (42) including a flange (42f) electrically connected to the first conductive member (41),
a fastener (43) mechanically securing the first conductive member (41) and the flange (42f) of the second conductive member (42) to each other, and
a metal joint (45) metal-joining the first conductive member (41) and the flange (42f) of the second conductive member (42) to each other at a location away from the fastener (43),
the first conductive member (41) contains aluminum or an aluminum alloy,
the second conductive member (42) contains copper or a copper alloy,
the metal joint (45) includes a fused and solidified portion in which the first conductive member (41) and the second conductive member (42) are fused together,
the fused and solidified portion includes a first sub-portion (451) formed in the first conductive member (41), and a second sub-portion (452) formed in the second conductive member (42), and
when viewed in cross section, an area of the second sub-portion (452) is 35% or less of an area of the first sub-portion (451).

2. The battery (100) according to claim 1, wherein
when viewed in cross section, an end of the first sub-portion (451) in contact with the second conductive member (42) has a first width (W1), an end of the second sub-portion (452) in contact with the first conductive member (41) has a second width (W2), and the first width (W1) is greater than the second width (W2).

3. The battery (100) according to claim 2, wherein
when viewed in cross section, a ratio of the second width (W2) to the first width (W1) is 2/3 or less.

4. The battery (100) according to any one of claims 1 to 3, wherein
when viewed in cross section, an end of the first sub-portion (451) in contact with the second conductive member (42) has a first width (W1), an end of the first sub-portion (451) located away from the second conductive member (42) has a third width (W3), and a ratio of the first width (W1) to the third width (W3) is between 0.6 to 0.9 inclusive.

5. The battery (100) according to any one of claims 1 to 4, wherein
a percentage of copper content in the first sub-portion (451) is 30% or less by mass.

6. The battery (100) according to any one of claims 1 to 5, wherein
when viewed in cross section, the first sub-portion (451) has a first fusion depth (T1), the second sub-portion (452) has a second fusion depth (T2), and the first fusion depth (T1) is greater than the second fusion depth (T2).

7. The battery (100) according to any one of claims 1 to 6, wherein
when viewed in cross section, the first sub-portion (451) has a first fusion depth (T1), the second sub-portion (452) has a second fusion depth (T2), and a ratio of the second fusion depth (T2) to the first fusion depth (T1) is 2/3 or less.

8. The battery (100) according to any one of claims 1 to 7, wherein
the first conductive member (41) includes a recess (41r) in which at least a portion of the flange (42f) of the second conductive member (42) is housed, and
the fastener (43) is formed by securing an inner wall of the recess (41r) of the first conductive member (41) with the portion of the second conductive member (42) housed in the recess (41r).

9. The battery (100) according to any one of claims 1 to 8, wherein
the flange (42f) of the second conductive member (42) includes a constricted portion (42n) fitted to the first conductive member (41), and
the fastener (43) is a fitted portion in which the constricted portion (42n) of the second conductive member (42) and the first conductive member (41) are fitted to each other.

10. The battery (100) according to any one of claims 1 to 9, wherein
the metal joint (45) is disposed closer to a center of the flange (42f) than the fastener (43) in a plan view.

11. The battery (100) according to any one of claims 1 to 10, wherein
the first conductive member (41) has a substantially rectangular shape, and
a center of the first conductive member (41) and a center of the flange (42f) of the second conductive member (42) are located at different positions in a longitudinal direction of the first conductive member (41).
